# EUROPEAN PATENT APPLICATION

(11) **EP 3 917 151 A1**
(43) Date of publication of application: **01.12.2021**
(21) Application number: 19918714.7
(22) Date of filing: 03.04.2019
(51) Int. Cl.: H04N 21/422

(54) **MATCHING METHOD AND DEVICE**

(30) Priority: 08.03.2019 CN 201910177167
(71) Applicant: Shenzen Sei Robotics Co., Ltd, Guangdong 518057 (CN)
(72) Inventor: YIN, Ji Sheng, Shenzhen, Guangdong 518057 (CN)
(74) Representative: Huang, Liwei
(86) International application number: PCT/CN2019/081245
(87) International publication number: WO 2020/181596

(57) **Abstract**

The embodiments of the present invention propose a method and device for matching up devices. They can be applied to a system comprising a set-top box, a terminal to be controlled, a remote control, and a cloud server, in which the said set-top box is physically connected to the said terminal to be controlled, and is also connected to the said cloud server via the Internet; the method comprises: obtaining the EDID information of the said terminal to be controlled through the set-top box, and confirming the identification information based on the said EDID information; sending the said identification information to the cloud server through the said set-top box; searching for the infrared code library corresponding to the identification information through the said cloud server, and delivering the infrared code library to the said set-top box; and sending the infrared codes in the said infrared code library to the remote control through the said set-top box for the matching process. With this method and device, automatic matching is realized and the efficiency of matching is enhanced. Since it is easy to use, the user experience is also improved.

## Description

### Technical field

The present invention relates to the field of data processing, in particular to a method and device for matching up devices.

### Background technology

Currently, the method through which a remote control controls a TV is generally that the manufacturer specifically matches the TV with the corresponding remote control; with this method, once the matched remote control is damaged or lost, the TV cannot be remotely controlled, which is very inconvenient.

In view of this, another control method of manually inputting codes into the remote control is developed. After codes are manually inputted in order, they will be used by the remote control to control the TV so as to determine which set of codes is valid, and then the remote control will learn those codes to match itself with the TV. However, this method is complicated and inconvenient. The process is laborious and difficult for ordinary people to master, which will create a bad user experience.

For this reason, a better matching method is required.

### Summary of the invention

Given the above, the present invention proposes a method and device for matching up devices, with which automatic matching is realized and the efficiency of matching enhanced. Since it is easy to use, the user experience is also improved.

Specifically, the present invention proposes the following specific embodiments:
The embodiments of the present invention propose a method for matching up devices. It can be applied to a system comprising a set-top box, a terminal to be controlled, a remote control, and a cloud server, in which the said set-top box is physically connected to the said terminal to be controlled, and is also connected to the said cloud server via the Internet; the said method comprises:
obtaining the EDID information of the said terminal to be controlled through the set-top box, and confirming the identification information based on the said EDID information;
sending the said identification information to the cloud server through the said set-top box;
searching for the infrared code library corresponding to the identification information through a said cloud server, and delivering the infrared code library to the said set-top box;
and sending the infrared codes in the said infrared code library to the remote control through the said set-top box for the matching process.
In a specific embodiment, the said set-top box is connected to the said terminal to be controlled via an HDMI cable;
the said "obtaining the EDID information of the said terminal to be controlled through the set-top box" comprises:
   obtaining the EDID information of the said terminal to be controlled through the set-top box using the said HDMI cable.

In a specific embodiment, the said identification information is Company info and the said EDID information comprises the information of a field called Manufacture Name;
the said "confirming the identification information based on the said EDID information" comprises:
extracting the information of the Manufacture Name field in the said EDID information;
searching for Company info corresponding to the said information of the Manufacture Name field in the PNP ID list stored in the said set-top box; wherein the correspondence between the information of the Manufacture Name field and Company info is stored in the said PNP ID list.

In a specific embodiment, the said infrared code library comprises one or more sets of infrared codes;
the said "sending the infrared codes in the said infrared code library to the remote control through the said set-top box for the matching process" comprises:
sorting the infrared codes in the said infrared code library via said set-top box;
encapsulating the first currently unencapsulated infrared code based on the preset protocol;
sending the encapsulated infrared code to the remote control via Bluetooth;
resolving the encapsulated infrared code through the remote control based on the preset protocol, and storing the currently resolved infrared code in its own memory;
verifying and learning the currently resolved infrared code for the terminal to be controlled by using the said remote control in the first mode;
if the verification and learning succeed, the said remote control and the said terminal to be controlled are successfully matched.

In a specific embodiment, the said method also comprises:
if the verification and learning fail, the process "encapsulating the first currently unencapsulated infrared code based on the preset protocol" is carried out.

In a specific embodiment, the said remote control and the said set-top box are connected via Bluetooth; the said method also comprises:
controlling the said set-top box by sending Bluetooth signals to the said set-top box through the said remote control.

In a specific embodiment, the said remote control has many infrared buttons;
the said verification and learning comprises: by controlling the said infrared button, judging whether the said terminal to be controlled can perform the operation corresponding to the value of the said infrared button.

In a specific embodiment, the said infrared buttons comprises one or more random combinations of the following buttons: Power, vol+, vol-, and mute infrared buttons.

The embodiments of the present invention also propose a device for matching up devices. It can be applied to a system comprising a set-top box, a terminal to be controlled, a remote control, and a cloud server, in which the said set-top box is physically connected to the said terminal to be controlled, and is also connected to the said cloud server via the Internet; the said device comprises:
an obtaining module, used for obtaining the EDID information of the said terminal to be controlled through the set-top box and confirming the identification information based on the said EDID information;
a sending module, used for sending the said identification information to the cloud server through the said set-top box;
a searching module, used for searching for the infrared code library corresponding to the identification information through the said cloud server and delivering the infrared code library to the said set-top box;
a matching module, used for sending the infrared codes in the said infrared code library to the remote control through the said set-top box for the matching process.

In a specific embodiment, the said set-top box is connected to the said terminal to be controlled via an HDMI cable;
the said "obtaining the EDID information of the said terminal to be controlled through the set-top box" by the obtaining module comprises:
obtaining the EDID information of the said terminal to be controlled through the set-top box using the said HDMI cable.

Therefore, the embodiments of the present invention propose a method and device for matching up devices. They can be applied to a system comprising a set-top box, a terminal to be controlled, a remote control, and a cloud server, in which the said set-top box is physically connected to the said terminal to be controlled, and is also connected to the said cloud server via the Internet; the method comprises: obtaining the EDID information of the said terminal to be controlled through the set-top box, and confirming the identification information based on the said EDID information; sending the said identification information to the cloud server through the said set-top box; searching for the infrared code library corresponding to the identification information through the said cloud server, and delivering the infrared code library to the said set-top box; and sending the infrared codes in the said infrared code library to the remote control through the said set-top box for the matching process. With this method and device, automatic matching is realized and the efficiency of matching is enhanced. Since it is easy to use, the user experience is also improved.

### Brief description of figures

In order to explain the technical solutions in the embodiments of the present invention more clearly, the appended figures in these embodiments will be briefly described below. It should be understood that the following figures are only for some embodiments of the present invention and therefore should not be regarded as limitations on its scope. For those of ordinary skill in the art, other figures can be obtained based on these figures without creative work.
Figure 1 is the process diagram of the method for matching up devices proposed by the embodiments of the present invention;
Figure 2 is the diagram of the system to which the method for matching up devices proposed by the embodiments of the present invention is applied;
Figure 3 is the diagram of the matching process of the method for matching up devices proposed by the embodiments of the present invention;
Figure 4 is the structure diagram of the device for matching up devices proposed by the embodiments of the present invention.

### Detailed description of the invention embodiments

Various embodiments of the present disclosure will be described in detail below. The present disclosure may have various embodiments, and adjustments and changes may be made therein. However, it should be understood that the various embodiments of the present disclosure shall not be limited to the schematic diagrams of specific embodiments disclosed herein. Instead, the present disclosure should be interpreted as covering all the adjustments, equivalents and/or alternatives that fall within the spirit and scope of the various embodiments of the present disclosure.

The terms used in the various embodiments of the present disclosure are only used for the purpose of describing specific embodiments and are not intended to limit the various embodiments of the present disclosure. As used herein, the singular form is also intended to include the plural form, unless otherwise clearly indicated in the context. Unless otherwise defined, all terms (including technical terms and scientific terminology) used herein have the same meanings as commonly understood by those of ordinary skill in the art to which the various embodiments of the present disclosure belong. The terms (such as those defined in commonly used dictionaries) will be interpreted as having the same meaning as the contextual meaning in the relevant technical field and will not be interpreted as having an idealized meaning or an overly formal meaning, unless clearly defined in the various embodiments of the present disclosure.

### Embodiment 1

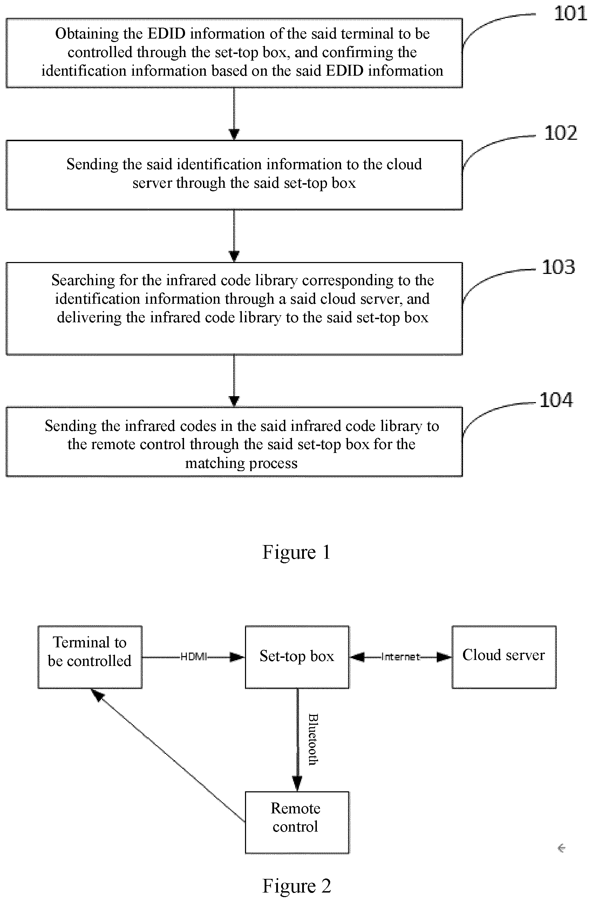

The embodiments of the present invention disclose a method for matching up devices. It can be applied to a system comprising a set-top box, a terminal to be controlled, a remote control, and a cloud server, in which the said set-top box is physically connected to the said terminal to be controlled, and is also connected to the said cloud server via the Internet; as shown in Figure 1, the said method comprises the following steps:
Step 101: obtaining the EDID information of the said terminal to be controlled through the set-top box, and confirming the identification information based on the said EDID information;
Specifically, as shown in Figure 2, the said system comprises a set-top box, a terminal to be controlled, a remote control, and a cloud server. This embodiment will take the TV, the terminal to be controlled, and the remote control (RCU) as examples to explain. As to the connection among the functional modules in the system, all devices are connected in a bidirectional manner except that the remote control and the TV are connected in a unidirectional manner through infrared (IR) signals; first, the set-top box (STB) is connected to the TV through an HDMI cable, so that the APK software in the set-top box can obtain the EDID information of the TV After connecting to the cloud server, the set-top box searches for the infrared code corresponding to the EDID, and sends the infrared code to the remote control via Bluetooth (BLE), so that the remote control transmits infrared signals based on the infrared code to learn about and match with the TV. If the matching is completed, the TV can be controlled.

Specifically, the said set-top box is connected to the said terminal to be controlled via an HDMI cable; therefore, the said "obtaining the EDID information of the said terminal to be controlled through the set-top box" in Step 101 comprises:
obtaining the EDID (Extended Display Identification Data) information of the said terminal to be controlled through the set-top box using the said HDMI cable.

In addition, the said identification information is Company info and the said EDID information comprises the information of a field called Manufacture Name;
the said "confirming the identification information based on the said EDID information" comprises:
extracting the information of the Manufacture Name field in the said EDID information;
searching for Company info corresponding to the said information of the Manufacture Name field in the PNP ID list pre-stored in the said set-top box; wherein the correspondence between the information of the Manufacture Name field and Company info is stored in the said PNP ID list.

Specifically, the PNP ID list is pre-stored in the said set-top box, and the correspondence between the information of the Manufacture Name field and Company info is stored in the said list. Thus the identification information, namely Company info, can be obtained.

Step 102: sending the said identification information to the cloud server through the said set-top box;

Specifically, the identification information can be sent to the cloud server via the Internet.

Step 103: searching for the infrared code library corresponding to the identification information through the said cloud server, and delivering the infrared code library to the said set-top box;

Step 104: sending the infrared codes in the said infrared code library to the remote control through the said set-top box for the matching process.

In a specific embodiment, the said infrared code library comprises one or more sets of infrared codes;

The said "sending the infrared codes in the said infrared code library to the remote control through the said set-top box for the matching process" in Step 104 comprises:
sorting the infrared codes in the said infrared code library via said set-top box;
encapsulating the first currently unencapsulated infrared code based on the preset protocol;
sending the encapsulated infrared code to the remote control via Bluetooth;
resolving the encapsulated infrared code through the remote control based on the preset protocol, and storing the currently resolved infrared code in its own memory;
verifying and learning the currently resolved infrared code for the terminal to be controlled by using the said remote control in the first mode;
if the verification and learning succeed, the said remote control and the said terminal to be controlled are successfully matched.

Specifically, the first mode is the infrared mode. The remote control transmits an infrared control signal to the terminal to be controlled based on the currently resolved infrared code, and judges whether the learning process is successful in accordance with whether the response of the terminal to be controlled is corresponding to the infrared control signal.

Specifically, for example, the infrared code library contains three sets of infrared codes: infrared codes A, infrared codes B, and infrared codes C. These three sets of infrared codes are sorted into a proper order, such as infrared codes A-infrared codes B-infrared codes C. First, send infrared codes A to the remote control. The remote control will then resolve the said infrared codes A and verify and learn infrared codes A for the terminal to be controlled in the first mode.

Specifically, in the case of the TV being the terminal to be controlled, the first mode can be the preset TV mode.

Specifically, if the verification and learning of infrared codes A fail, the said method also comprises:
if the verification and learning fail, the process "encapsulating the first currently unencapsulated infrared code based on the preset protocol" is carried out.

Specifically, with the said example, if the verification and learning of infrared codes A fail, the same operation will be carried out with infrared codes B and infrared codes C in order until the verification and learning succeed.

In a specific embodiment, the said remote control and the said set-top box are connected via Bluetooth; the said method also comprises:
controlling the said set-top box by sending Bluetooth signals to the said set-top box through the said remote control.

Specifically, apart from the verification and learning for the terminal to be controlled, the matching process can also be performed based on the set-top box.

Specifically, the said remote control has many infrared buttons;
the said verification and learning comprises: by controlling the said infrared button, judging whether the said terminal to be controlled can perform the operation corresponding to the value of the said infrared button.

In a specific embodiment, the said infrared buttons comprises one or more random combinations of the following buttons: Power, vol+, vol-, and mute infrared buttons.

Therefore, in a specific embodiment, for example, APK software will be installed in the set-top box, and the remote control is matched up with the set-top box system via Bluetooth. The APK software will obtain the EDID information of the TV after it is installed. It will then extract the information of the Manufacture Name field from the EDID and compare the said information with the locally stored PNP ID list to search for Company info. Once found, the Company info will be used to search for the corresponding infrared code library on the cloud server via the Internet. Then the needed infrared code library will be sent to the said APK software through the Internet and stored by it. At this point, the infrared code library may have several sets of codes. The said APK software would encapsulate the first set of codes according to a proprietary protocol. After encapsulation, the proprietary protocol data will be sent to the remote control via Bluetooth. Upon receiving the data, the remote control will begin to resolve it and store the infrared codes in its flash. The remote control can be operated in front of the TV to verify if it has learned the codes of the said four buttons.

If the learning fails, the second set of infrared codes will be verified until the TV can be successfully controlled. If the TV cannot be controlled after the learning of all the infrared codes, the smart learning process will be terminated. When the remote control is switched to the TV mode, the LED on it will flash twice and operating the said four buttons will send IR signals to the TV. When the remote control is switched to the OTT mode, the LED on it will flash three times and operating the said four buttons will send Bluetooth signals to the set-top box.

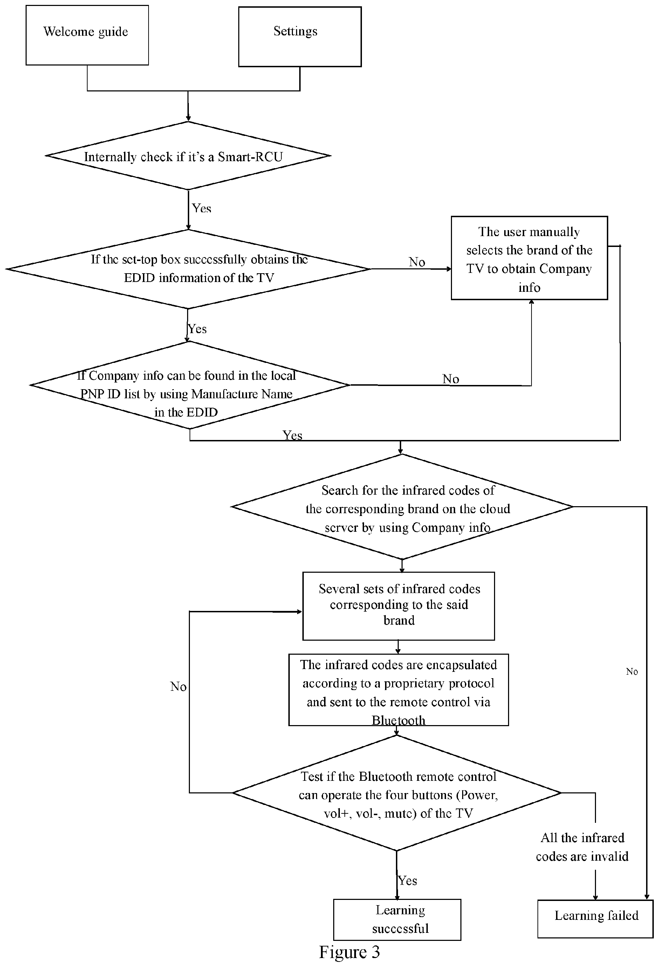

With the TV as an example of the terminal to be controlled, the detailed process of how the remote control learns the infrared codes of 4 buttons (Power, vol+, vol-, mute) is shown in Figure 3. The learning process is as follows: the set-top box (STB) obtains the EDID information of the TV through an HDMI cable and judges whether Company info can be found in the PNP ID list with Manufacture Name in the EDID; Company info is then used to search for the infrared codes of the corresponding brand on the cloud server; once found, the infrared codes are sent to the remote control via Bluetooth and the remote control controls the TV with the infrared codes it receives; if the TV can be turned on and off successfully, the learning succeeds.

### Embodiment 2

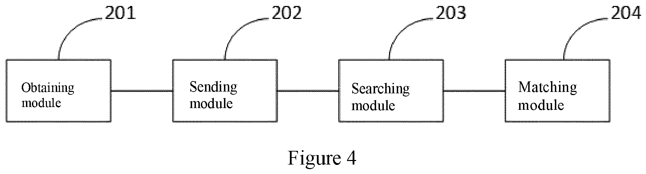

The embodiments of the present invention also disclose a device for matching up devices. It can be applied to a system comprising a set-top box, a terminal to be controlled, a remote control, and a cloud server, in which the said set-top box is physically connected to the said terminal to be controlled, and is also connected to the said cloud server via the Internet; as shown in Figure 4, the said device comprises:
obtaining module 201, used for obtaining the EDID information of the said terminal to be controlled through the set-top box, and confirming the identification information based on the said EDID information;
sending module 202, used for sending the said identification information to the cloud server through the said set-top box;
searching module 203, used for searching for the infrared code library corresponding to the identification information through the said cloud server and delivering the infrared code library to the said set-top box;
matching module 204, used for sending the infrared codes in the said infrared code library to the remote control through the said set-top box for the matching process.

In a specific embodiment, the said set-top box is connected to the said terminal to be controlled via an HDMI cable;

The said "obtaining the EDID information of the said terminal to be controlled through the set-top box" of obtaining module 201 comprises:
obtaining the EDID information of the said terminal to be controlled through the set-top box using the said HDMI cable.

In a specific embodiment, the said identification information is Company info and the said EDID information comprises the information of a field called Manufacture Name;

The said "confirming the identification information based on the said EDID information" of obtaining module 201 comprises:
extracting the information of the Manufacture Name field in the said EDID information;
searching for Company info corresponding to the said information of the Manufacture Name field in the PNP ID list pre-stored in the said set-top box; wherein the correspondence between the information of the Manufacture Name field and Company info is stored in the said PNP ID list.

In a specific embodiment, the said infrared code library comprises one or more sets of infrared codes;

The said "sending the infrared codes in the said infrared code library to the remote control through the said set-top box for the matching process" of matching module 204 comprises:
sorting the infrared codes in the said infrared code library via said set-top box;
encapsulating the first currently unencapsulated infrared code based on the preset protocol;
sending the encapsulated infrared code to the remote control via Bluetooth;
resolving the encapsulated infrared code through the remote control based on the preset protocol, and storing the currently resolved infrared code in its own memory;
verifying and learning the currently resolved infrared code for the terminal to be controlled by using the said remote control in the first mode;
if the verification and learning succeed, the said remote control and the said terminal to be controlled are successfully matched.

In a specific embodiment, the said matching module 204 is also used for the following:
if the verification and learning fail, the process "encapsulating the first currently unencapsulated infrared code based on the preset protocol" is carried out.

In a specific embodiment, the said remote control and the said set-top box are connected via Bluetooth; the said device also comprises a control module used for controlling the said set-top box by sending Bluetooth signals to it through the said remote control.

In a specific embodiment, the said remote control has many infrared buttons;
the said verification and learning comprises: by controlling the said infrared button, judging whether the said terminal to be controlled can perform the operation corresponding to the value of the said infrared button.

In a specific embodiment, the said infrared buttons comprises one or more random combinations of the following buttons: Power, vol+, vol-, and mute infrared buttons.

Therefore, the embodiments of the present invention propose a method and device for matching up devices. They can be applied to a system comprising a set-top box, a terminal to be controlled, a remote control, and a cloud server, in which the said set-top box is physically connected to the said terminal to be controlled, and is also connected to the said cloud server via the Internet; the method comprises: obtaining the EDID information of the said terminal to be controlled through the set-top box, and confirming the identification information based on the said EDID information; sending the said identification information to the cloud server through the said set-top box; searching for the infrared code library corresponding to the identification information through the said cloud server, and delivering the infrared code library to the said set-top box; and sending the infrared codes in the said infrared code library to the remote control through the said set-top box for the matching process. With this method and device, automatic matching is realized and the efficiency of matching enhanced. Since it is easy to use, the user experience is also improved.

Those skilled in the art understand that appended figures are only schematic diagrams of a preferred implementation scenario, and that the modules or processes in appended figures are not always necessary for implementing the invention.

Those skilled in the art understand that the modules of the device in the implementation scenario can be distributed in the device in the implementation scenario according to the description of the implementation scenario, or can be changed to be placed in one or more devices different from the implementation scenario. The modules of the said implementation scenario can be combined into one module or further divided into multiple submodules.

The said sequence numbers of the present invention are only for description, and do not represent the superiority or inferiority of implementation scenarios.

What has been disclosed above are only a few specific implementation scenarios of the present invention. However, the present invention is not limited thereto, and any changes that can be thought of by those skilled in the art should fall into the scope of the present invention.

## Claims

1. A method for matching up devices, **characterized in that** it is applied to a system comprising a set-top box, a terminal to be controlled, a remote control, and a cloud server, in which the said set-top box is physically connected to the said terminal to be controlled, and is also connected to the said cloud server via network; the method comprises:
obtaining EDID information of the said terminal to be controlled through the set-top box, and confirming identification information based on the said EDID information;
sending the said identification information to the cloud server through the said set-top box;
searching for an infrared code library corresponding to the identification information through a said cloud server, and delivering the infrared code library to the said set-top box;
and sending infrared codes in the said infrared code library to the remote control through the said set-top box, for the matching process.

2. The said method for matching up devices, as claimed in Claim 1, **characterized in that**, the said set-top box is connected to the said terminal to be controlled via an HDMI cable;
the said "obtaining the EDID information of the said terminal to be controlled through the set-top box" comprises:
obtaining the EDID information of the said terminal to be controlled through the set-top box using the said HDMI cable.

3. The said method for matching up devices, as claimed in Claim 1, **characterized in that** the said identification information is Company info and the said EDID information comprises information of a field called Manufacture Name;
the said "confirming the identification information based on the said EDID information" comprises:
extracting the information of the field Manufacture Name in the said EDID information;
searching for Company info corresponding to the said information of the field Manufacture Name in a PNP ID list pre-stored in the said set-top box; wherein the correspondence between the information of the field Manufacture Name and the Company info is stored in the said PNP ID list.

4. The said method for matching up devices, as claimed in Claim 1, **characterized in that** the said infrared code library comprises one or more sets of infrared codes;
the said "sending the infrared codes in the said infrared code library to the remote control through the said set-top box for the matching process" comprises:
sorting the infrared codes in the said infrared code library via said set-top box;
encapsulating an infrared code which is currently ranked as the first in unencapsulated infrared codes, based on a preset protocol;
sending the encapsulated infrared code to the remote control via Bluetooth;
resolving the encapsulated infrared code through the remote control based on the preset protocol, and storing the currently resolved infrared code in its own memory;
verifying and learning the currently resolved infrared code for the terminal to be controlled by using the said remote control in a first mode;
if the verification and learning succeed, the said remote control and the said terminal to be controlled are successfully matched.

5. The said method for matching up devices as claimed in Claim 4, **characterized in that**, the said method also comprises:
if the verification and learning fail, carrying out the process of "encapsulating an infrared code which is currently ranked as the first in unencapsulated infrared codes".

6. The said method for matching up devices, as claimed in Claim 1, **characterized in that** the said remote control and the said set-top box are connected via Bluetooth; the said method also comprises:
controlling the said set-top box by sending Bluetooth signals to the said set-top box through the said remote control.

7. The said method for matching up devices as claimed in Claim 4, **characterized in that** the said remote control has multiple infrared buttons;
the said verification and learning comprises: by controlling the said infrared button, judging whether the said terminal to be controlled can perform a operation corresponding to a value of the said infrared button.

8. The said method for matching up devices as claimed in Claim 7, **characterized in that** the said infrared buttons comprise one or any combination of the following buttons: Power, vol+, vol-, and mute infrared buttons.

9. A device for matching up devices, **characterized in that** it is applied to a system comprising a set-top box, a terminal to be controlled, a remote control, and a cloud server, in which the said set-top box is physically connected to the said terminal to be controlled, and is also connected to the said cloud server via the network; the device comprises:
an obtaining module, used for obtaining EDID information of the said terminal to be controlled through the set-top box and confirming identification information based on the said EDID information;
a sending module, used for sending the said identification information to the cloud server through the said set-top box;
a searching module, used for searching for an infrared code library corresponding to the identification information through the said cloud server and delivering the infrared code library to the said set-top box;
a matching module, used for sending infrared codes in the said infrared code library to the remote control through the said set-top box, for the matching process.

10. A device for matching up devices as claimed in Claim 9, **characterized in that** the said set-top box is connected to the said terminal to be controlled via an HDMI cable;
the said "obtaining the EDID information of the said terminal to be controlled through the set-top box" by the obtaining module comprises:
obtaining the EDID information of the said terminal to be controlled through the set-top box using the said HDMI cable.
